# EUROPEAN PATENT SPECIFICATION

(11) **EP 2 679 898 B1**
(45) Date of publication and mention of the grant of the patent: **02.09.2015**
(21) Application number: 13171692.0
(22) Date of filing: 12.06.2013
(51) Int. Cl.: F23J 15/00, F23J 15/02, F23J 15/06, B01D 53/56, B01D 53/86

(54) **Denitration apparatus used for a coal-fired boiler**
Denitrierungsvorrichtung für einen kohlegefeuerten Kessel
Appareil de dénitration utilisé pour une chaudière à charbon

(30) Priority: 29.06.2012 JP 2012146868
(43) Date of publication of application: 01.01.2014
(73) Proprietor: Mitsubishi Hitachi Power Systems, Ltd., Yokohama 220-8401 (JP)
(72) Inventor: OKAZAKI, Taro, Kure-shi, Hiroshima 737-8508 (JP); OGASAWARA, Toru, Kure-shi, Hiroshima 737-8508 (JP); KAJIKAWA, Kazuhiko, Kure-shi, Hiroshima 737-8508 (JP); SHIMOGORI, Yoshio, Kure-shi, Hiroshima 737-8508 (JP); HARADA, Tomokazu, Kure-shi, Hiroshima 737-8508 (JP)
(74) Representative: Lock, Graham James

(56) References cited:
- US-A- 4 160 009
- US-A1- 2008 142 608
- US-B1- 6 257 155

## Description

### Technical Field

The present invention relates to a denitration apparatus used for a coal-fired boiler, and more particularly to a denitration apparatus that can reduce cost for additionally providing the denitration apparatus without deteriorating efficiency of a whole plant.

### Background Art

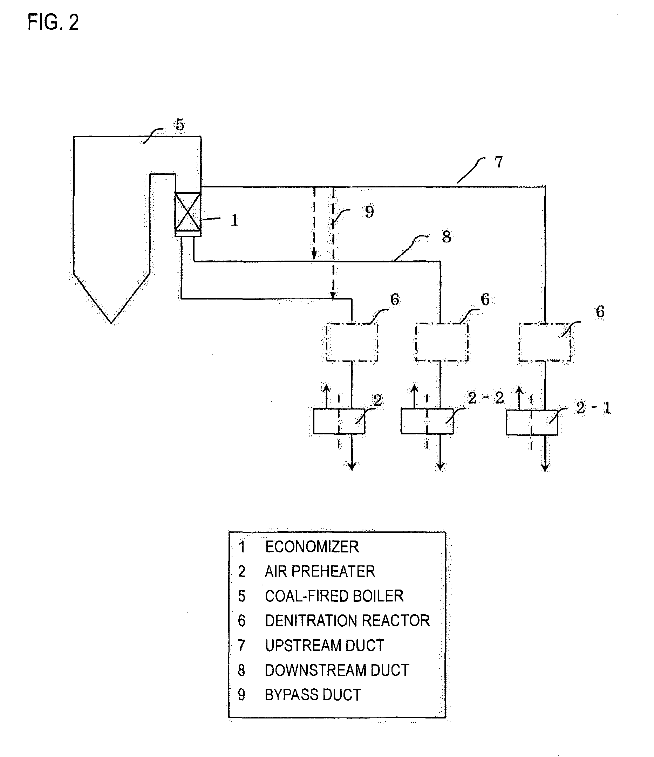

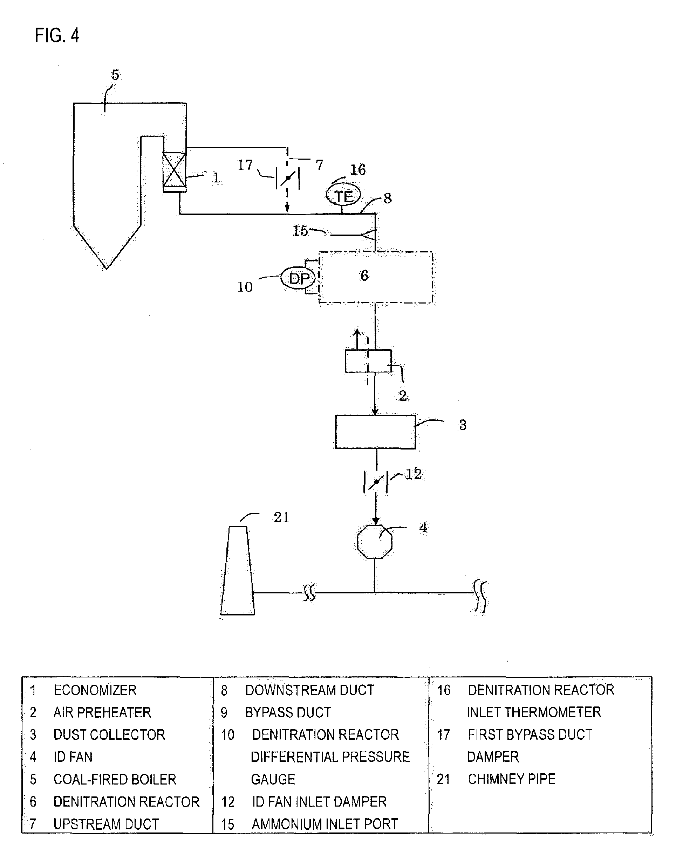

As illustrated in Figs. 2 to 4, a conventional denitration apparatus used for a coal-fired boiler includes exhaust ducts (upstream ducts) 7 and 8 provided at the upstream side and the downstream side of an economizer 1, and a first air preheater 2-1 and a second air preheater 2-2 provided respectively to the exhaust ducts (upstream ducts) 7 and 8. In a conventional denitration apparatus used for a coal-fired boiler, a dust collector 3 and an ID fan 4 might be provided at the downstream side of the air preheater 2 as illustrated in Fig. 4.

When the conventional denitration apparatus is installed to the coal-fired boiler, problems described below arise. As illustrated in Fig. 2, a system of providing a denitration reactor 6 to the respective exhaust ducts (upstream ducts) 7 and 8 is a popular system of providing a denitration reactor. In this case, each of exhaust ducts has to equip the denitration reactor 6, a steel/ash removal device, an exhaust gas analyzer, and the like, increasing a cost.

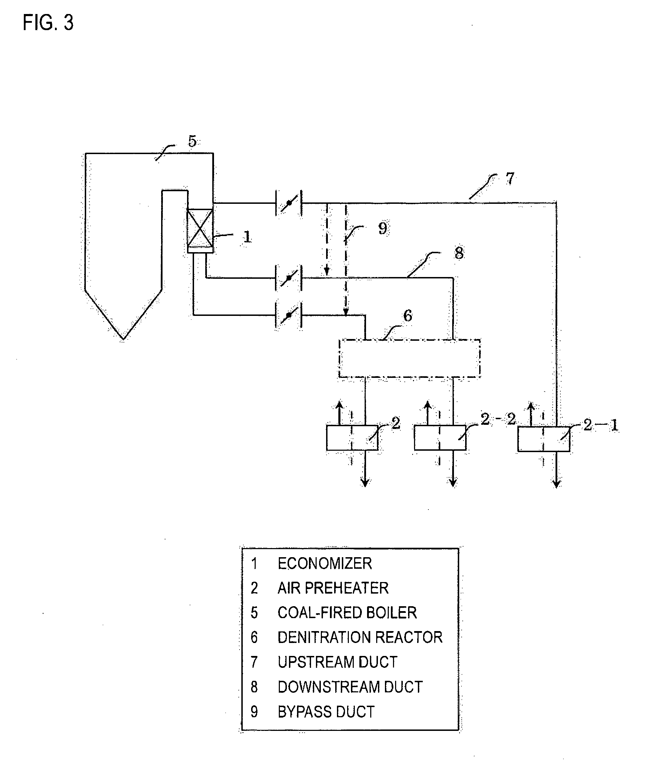

There is another system of carrying out a local denitration by providing the denitration reactor 6 at the exhaust duct (downstream duct) 8 at the downstream side of the economizer 1 as illustrated in Fig. 3. According to this system, the exhaust gas flowing through the second air preheater 2-2 is highly denitrated, whereby a restricted value of NOx at the outlet can be attained. It has been known that, in a selective catalytic reduction method using a catalyst, ammonium and SO₃ in the exhaust gas are reacted to generate ammonium sulfate (NH₄HSO₄), unless the temperature is set to be a predetermined temperature (the temperature at which the denitration can be done) upon injecting ammonium serving as a reduction agent, and hence, catalytic performance is deteriorated. In the denitration system illustrated in Figs. 2 and 3, when the load to the coal-fired boiler 5 is reduced, the temperature of the exhaust gas flowing through the exhaust duct (downstream duct) 8 at the downstream side of the economizer 1 might be lower than the temperature at which the denitration can be done. Therefore, the catalytic performance is deteriorated, whereby the denitration cannot be done.

In order to solve this problem, as illustrated in Figs. 2 and 3, it has been proposed that a bypass duct 9 connecting the exhaust duct (upstream duct) 7 at the upstream side of the economizer 1 and the exhaust duct (downstream duct) 8 at the downstream side of the economizer 1 is provided at the upstream side of the denitration reactor 6 for flowing the high-temperature exhaust gas into the exhaust duct (downstream duct) 8 at the downstream side of the economizer 1, in order to increase the temperature of the exhaust gas to the temperature at which the denitration can be done (see, for example, Patent Literature JP 6-11132 A.

The document US 6 257 155 B1 discloses a damper vane assembly for controlling the flow of flue gas between a flue gas pass of a combustion vessel and a selective catalytic reactor operable to catalytically treat flue gas in a combustion system. Flue gas from upstream and/or downstream of an economizer is guided to the selective catalytic reactor in different proportions. Most downstream, an air preheater is connected to the flue gas duct.

The document US 4 160 009 A shows a boiler apparatus having a furnace and a plurality of heat exchanger stages disposed in a channel for the combustion gas discharged from the furnace. The boiler apparatus is equipped with two catalytic denitrators having each its own downstream air preheating heat exchanger.

### Citation List

### Patent Literature

JP 6-11132 A
US 6 257 115 B1
US 4 160 009 A

### Summary of Invention

### Technical Problem

Fig. 4 is a diagram illustrating a general arrangement of the air preheater 2. In the denitration system illustrated in Fig. 4, the amount of the exhaust gas flowing into the air preheater 2 is constant, regardless of whether the bypass duct connecting the exhaust duct (upstream duct) 7 and the exhaust duct (downstream duct) 8 is provided. Therefore, there is no chance that the efficiency of the heat recovery at the air preheater 2 is deteriorated. However, in the denitration system illustrated in Figs. 2 and 3, the inlet temperature of the denitration reactor 6 is increased by utilizing the exhaust gas from the exhaust duct (upstream duct) 7 at the upstream side of the economizer 1 by use of the bypass duct 9. Accordingly, the amount of the exhaust gas flowing through the first air preheater 2-1 is reduced to decrease the heat recovery rate, whereby the temperature of the heated air by the first air preheater 2-1 is decreased. Consequently, the efficiency of the whole plant is deteriorated.

The present invention aims to provide a denitration apparatus that can reduce cost for additionally providing the denitration apparatus without deteriorating efficiency of a whole plant.

### Solution to Problem

A denitration apparatus according to the present invention includes: a coal-fired boiler; an economizer provided to the coal-fired boiler; an upstream duct that guides exhaust gas from the upstream side of the economizer; a downstream duct that guides exhaust gas from the downstream side of the economizer; a first air preheater provided at the downstream side of the upstream duct; a second air preheater provided at the downstream side of the downstream duct; a denitration reactor provided at the upstream side of the first air preheater or the second air preheater; a first bypass duct provided at the upstream side of the denitration reactor for connecting the upstream duct and the downstream duct; and a second bypass duct provided at the downstream side of the denitration reactor for connecting the upstream duct and the downstream duct.

According to this configuration, the flow rate of the exhaust gas flowing through the first bypass duct is controlled to keep the temperature of the exhaust gas flowing into the denitration reactor at the temperature at which the denitration can be done, whereby the denitration performance of the denitration reactor can be maintained. In addition, the flow rate of the exhaust gas flowing through the second bypass duct is controlled to adjust the flow rate of the exhaust gas flowing into the air preheater at which the denitration reactor is not provided, in order to keep the temperature of the heated air at the prescribed temperature. This configuration can prevent the deterioration in the plant efficiency even with the low load, whereby the denitration performance can be maintained.

In the denitration apparatus according to the present invention, the first bypass duct guides the exhaust gas to the denitration reactor from the upstream side of the air preheater at which the denitration reactor is not provided, and the second bypass duct guides the exhaust gas from the downstream side of the denitration reactor to the air preheater at which the denitration reactor is not provided.

According to this configuration, the exhaust gas is guided to the denitration reactor from the upstream side of the air preheater at which the denitration reactor is not provided. Therefore, the temperature of the exhaust gas flowing into the denitration reactor is maintained at the temperature at which the denitration can be done. In addition, the exhaust gas is guided from the downstream side of the denitration reactor to the air preheater at which the denitration reactor is not provided. Therefore, the flow rate of the exhaust gas flowing into the air preheater at which the denitration reactor is not provided is adjusted, resulting in that the temperature of the heated air can be maintained at the predetermined temperature.

The denitration apparatus according to the present invention includes a first exhaust gas regulator that guides the total amount of the exhaust gas, flowing through the upstream side of the air preheater at which the denitration reactor is not provided, toward the denitration reactor when the temperature of the exhaust gas flowing into the denitration reactor is the same or less than a predetermined temperature, and a second exhaust gas regulator that guides some of the exhaust gas, flowing through the downstream side of the denitration reactor, toward the air preheater at which the denitration reactor is not provided.

According to this configuration, the exhaust gas in a total amount is guided toward the denitration reactor from the upstream side of the air preheater at which the denitration reactor is not provided, according to whether the temperature of the exhaust gas flowing into the denitration reactor reaches the temperature at which the denitration can be done. Accordingly, the temperature of the exhaust gas flowing into the denitration reactor can be maintained at the temperature at which the denitration can be done.

The denitration apparatus according to the present invention includes a first exhaust gas regulator that controls to increase the flow rate of the exhaust gas, guided toward the denitration reactor from the upstream side of the air preheater at which the denitration reactor is not provided, when the temperature of the exhaust gas flowing into the denitration reactor is the same or less than a predetermined temperature, and a second exhaust gas regulator that guides some of the exhaust gas, flowing through the downstream side of the denitration reactor, toward the air preheater at which the denitration reactor is not provided.

According to this configuration, the flow rate of the exhaust gas, flowing toward the denitration reactor from the upstream side of the air preheater at which the denitration reactor is not provided, is controlled to increase, according to whether the temperature of the exhaust gas flowing into the denitration reactor reaches the temperature at which the denitration can be done. Accordingly, the temperature of the exhaust gas flowing into the denitration reactor can be maintained at the temperature at which the denitration can be done.

The denitration apparatus according to the present invention includes a third exhaust gas regulator that adjusts the flow rate of the exhaust gas flowing into the denitration reactor according to a differential pressure of the exhaust gas in the denitration reactor.

According to this configuration, the flow rate of the exhaust gas flowing through the first bypass duct is controlled to keep the temperature of the exhaust gas flowing into the denitration reactor at the temperature at which the denitration can be done, whereby the denitration performance of the denitration reactor can be maintained. In addition, the flow rate of the exhaust gas flowing through the duct at which the denitration reactor is not provided is controlled to adjust the flow rate of the exhaust gas flowing into the air preheater at which the denitration reactor is not provided. This configuration can prevent the unbalance between the flow rates of the exhaust gas flowing through the air preheaters.

The denitration apparatus according to the present invention includes a fan that is provided at each of the downstream sides of the first air preheater and the second air preheater so as to take in the exhaust gas, and a fan flow controller that adjusts an intake amount of the fan.

According to this configuration, the fan provided at the downstream side of the air preheater adjusts the intake amount, thereby being capable of controlling the flow rate of the exhaust gas guided from the downstream side of the denitration reactor to the air preheater at which the denitration reactor is not provided.

In the denitration apparatus according to the present invention, the fan flow controller adjusts the intake amount of the fan according to the temperature of the air heated by the air preheater at which the denitration reactor is not provided.

According to this configuration, the temperature of the heated air by the air preheater is monitored, and the exhaust gas in the flow rate corresponding to the temperature of the heated air is guided to the air preheater through the second bypass duct. Therefore, the influence given to the plant efficiency can be prevented.

### Advantageous Effects of Invention

The present invention provides a denitration apparatus that can reduce cost for additionally providing the denitration apparatus without deteriorating efficiency of a whole plant.

### Brief Description of Drawings

Fig. 1 is a system diagram illustrating one example of a denitration apparatus according to the present invention.
Fig. 2 is a system diagram in which a denitration reactor is provided to each of a plurality of air preheater ducts.
Fig. 3 is a system diagram in which a denitration reactor is provided to a first air preheater or to a second air preheater.
Fig. 4 is a system diagram in which a denitration equipment is included at a downstream side of a boiler.

### Description of Embodiments

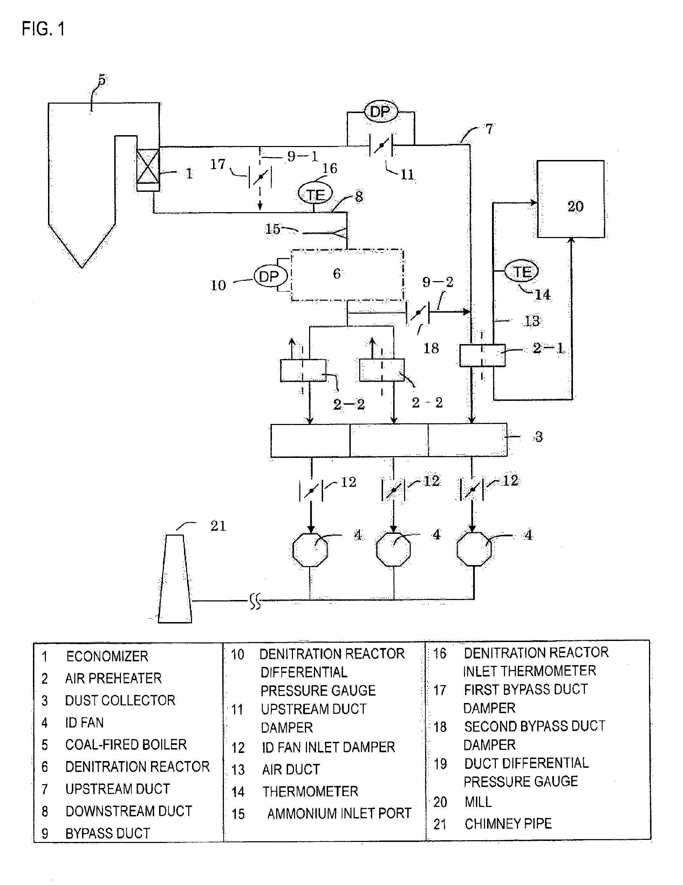

A denitration apparatus according to an embodiment of the present invention will be described below with reference to the drawings. Fig. 1 is a diagram including one example of a denitration apparatus according to the present embodiment. As illustrated in Fig. 1, the denitration apparatus includes an economizer 1 provided to a coal-fired boiler 5, an upstream duct 7 guiding exhaust gas from an upstream side of the economizer 1, a downstream duct 8 guiding the exhaust gas from a downstream side of the economizer 1, a first air preheater 2-1 provided at the downstream side of the upstream duct 7, a second air preheater 2-2 provided at the downstream side of the downstream duct 8, a denitration reactor 6 provided at the upstream side of the first air preheater 2-1 or the second air preheater 2-2, a first bypass duct 9-1 provided at the upstream side of the denitration reactor 6 for connecting the upstream duct 7 and the downstream duct 8, and a second bypass duct 9-2 provided at the downstream side of the denitration reactor 6 for connecting the upstream duct 7 and the downstream duct 8.

The exhaust ducts (upstream ducts) 7 and 8 are provided respectively at the upstream side and the downstream side of the economizer 1, and the first air preheater 2-1 and the second air preheater 2-2 are provided respectively to the exhaust ducts (upstream ducts) 7 and 8. A dust collector 3 and an ID fan 4 are provided respectively at the downstream side of the first air preheater 2-1 and the second air preheater 2-2. In the coal-fired boiler 5 including these elements, high-temperature exhaust gas flows into the first air preheater 2-1 from the exhaust duct (upstream duct) 7 at the upstream side of the economizer 1, and the air heated by the first air preheater 2-1 is generally used for drying coal. Exhaust gas flows from the exhaust duct (downstream duct) 8 at the downstream side of the economizer 1 into the second air preheater 2-2, and the air heated by the second air preheater 2-2 is generally used for combustion air.

When it is unnecessary to generate electric power more than necessary or steam for heating during the operation of the coal-fired boiler 5, the coal-fired boiler 5 is sometimes operated with a load lower than the load for the normal operation. In this case, the temperature of the exhaust gas flown from the upstream duct 7 might be lower than the temperature at which the denitration can be done. It is not preliminarily considered that the denitration reactor 6 and the like are additionally provided to an existing boiler. Therefore, when the denitration reactor 6 and the other peripheral devices are additionally provided in the existing boiler, the temperature of the exhaust gas on the downstream duct 8 might not reach the temperature at which the denitration can be done even during the normal operation of the boiler.

When the exhaust gas exhausted from the boiler is partially denitrated or fully denitrated by the coal-fired boiler system described above, the first bypass duct 9-1 provided at the upstream side of the denitration reactor 6 for connecting the upstream duct 7 and the downstream duct 8 is used in order to increase the temperature of the exhaust gas to the temperature at which the denitration can be done.

When some exhaust gas flowing through the upstream duct 7 is flown into the downstream duct 8 through the first bypass duct 9-1, the amount of the exhaust gas flowing into the first air preheater 2-1 varies, and this affects a plant efficiency. Therefore, in the present embodiment, when the temperature of the inlet exhaust gas flowing into the denitration reactor 6 is the same or less than the temperature at which ammonium can be injected (the temperature at which the denitration can be done), the total amount of the exhaust gas flowing through the upstream duct 7 is flown into the downstream duct 8 through the first bypass duct 9-1, and guided to the denitration reactor 6. On the other hand, some exhaust gas flowing through the downstream duct 8 is flown into the upstream duct 7 through the second bypass duct 9-2, and guided to the first air preheater 2-1. The exhaust gas in a flow rate almost same as the flow rate of the case not using the first bypass duct 9-1 is guided to the first air preheater 2-1 through the second bypass duct 9-2, whereby the influence given to the plant efficiency can be prevented. Alternatively, the temperature of the heated air by the air preheater 2-1 is monitored, and the exhaust gas in the flow rate corresponding to the temperature of the heated air is guided to the first air preheater 2-1 through the second bypass duct 9-2, whereby the influence given to the plant efficiency can be prevented.

As described above, the first bypass duct 9-1 guides the exhaust gas to the denitration reactor 6 from the upstream side of the air preheater (in the present embodiment, the first air preheater 2-1) at which the denitration reactor 6 is not provided, while the second bypass duct 9-2 guides the exhaust gas to the air preheater (in the present embodiment, the first air preheater 2-1) at which the denitration reactor 6 is not provided from the downstream side of the denitration reactor 6.

The denitration apparatus according to the present embodiment includes a first bypass duct damper (first exhaust gas regulator) 17 that guides the total amount of the exhaust gas to the denitration reactor 6 when the temperature of the exhaust gas flowing into the denitration reactor 6 is the same or less than a predetermined temperature (the temperature at which the denitration can be done), the total amount of the exhaust gas flows through the upstream side of the air preheater (in the present embodiment, the first air preheater 2-1) at which the denitration reactor 6 is not provided, and a second bypass duct damper (second exhaust gas regulator) 18 that guides some of the exhaust gas flowing through the downstream side of the denitration reactor 6 to the air preheater (in the present embodiment, the first air preheater 2-1) at which the denitration reactor 6 is not provided. With this configuration, the total amount of the exhaust gas flowing through the upstream duct 7 is flown into the downstream duct 8.

Specifically, it has been known that the temperature at which ammonium sulfate is generated is 300°C or lower. Therefore, a denitration reactor inlet thermometer 16 is provided at the upstream side of an ammonium inlet port 15 for injecting ammonium. When the temperature of the exhaust gas drops to the temperature region at which ammonium sulfate is generated (to the temperature less than the temperature at which the denitration can be done), the first bypass duct damper 17 at the upstream side of the denitration reactor 6 is opened, an upstream duct damper (a third exhaust gas regulator) 11 is closed, and the second bypass duct damper 18 at the downstream side of the denitration reactor 6 is opened. In the present embodiment, the first bypass duct damper 17 and the second bypass duct damper 18 are respectively provided to the first bypass duct 9-1 and the second bypass duct 9-2.

Some exhaust gas denitrated by the denitration reactor 6 is returned to the upstream side of the first air preheater 2-1 through the second bypass duct 9-2 provided at the downstream side of the denitration reactor 6. In this case, in order to collect sufficient heat quantity by the first air preheater 2-1, the temperature of the heated air used for drying coals is monitored by a thermometer 14, and the opening degree of an ID fan inlet damper 12 provided at the downstream side of the first air preheater 2-1 and the second air preheater 2-2 is controlled to allow the temperature of the heated air to be constant (allow the heated air to have a predetermined temperature), to control the flow rate of the exhaust gas flowing through the second bypass duct 9-2.

Specifically, in the denitration apparatus according to the present embodiment, the ID fan 4 for sucking exhaust gas is provided at the downstream side of the first air preheater 2-1 and the second air preheater 2-2, and the ID fan inlet damper (fan flow controller) 12 adjusts the intake amount of the ID fan 4. The ID fan inlet damper 12 adjusts the intake amount of the ID fan 4 according to the temperature of the air heated by the air preheater at which the denitration reactor 6 is not provided (in the present embodiment, the first air preheater 2-1).

When the temperature of the exhaust gas at the inlet of the denitration reactor 6 becomes not less than the temperature at which the ammonium can be injected (the temperature at which the denitration can be done), the first bypass duct damper 17 is closed, the upstream duct damper 11 is opened, and the second bypass duct damper 18 is closed. With this operation, the exhaust gas in the upstream duct 7 is not denitrated, but the exhaust gas in the downstream duct 8 is denitrated.

As described above, according to the denitration apparatus in the present embodiment, the flow rate of the exhaust gas flowing through the first bypass duct 9-1 is controlled to keep the temperature of the exhaust gas flowing into the denitration reactor 6 at the temperature at which the denitration can be done, whereby the denitration performance of the denitration reactor 6 can be maintained. In addition, the flow rate of the exhaust gas flowing through the second bypass duct 9-2 is controlled to adjust the flow rate of the exhaust gas flowing into the first air preheater 2-1, in order to keep the temperature of the heated air at the predetermined temperature. This configuration can prevent the deterioration in the plant efficiency even with the low load, whereby the denitration performance can be maintained.

While certain embodiment according to the present invention has been described above, the present invention is not limited to the embodiment, and various changes and modifications are possible without departing from the scope of the claims.

When the denitration reactor 6 and the like are additionally provided to the existing boiler, a pressure difference is caused between the exhaust gas flowing through the first air preheater 2-1 and the exhaust gas flowing through the second air preheater 2-2 due to the additional denitration system. Therefore, there is a difference between the amount of the exhaust gas flowing into the first air preheater 2-1 and the amount of the exhaust gas flowing into the second air preheater 2-2. In order to solve the problem described above, the configuration described below is provided. Specifically, a differential pressure of a denitration reactor differential pressure gauge 10 mounted to the denitration reactor 6 and a pressure of a duct differential pressure gauge 19 mounted to the upstream duct 7 are monitored, and the opening degree of the upstream duct damper (third exhaust gas regulator) 11 is adjusted in order that both pressures become constant (or the predetermined value). Thus, the unbalance of the flow rate of the exhaust gas flowing through the first air preheater 2-1 and the flow rate of the exhaust gas flowing through the second air preheater 2-2 is prevented.

The denitration apparatus according to the present embodiment includes the first bypass duct damper (the first exhaust gas regulator) 17 that adjusts the flow rate of the exhaust gas when the temperature of the exhaust gas flowing into the denitration reactor 6 is the same or less than the predetermined temperature (the temperature at which the denitration can be done) in order that the flow rate of the exhaust gas guided to the denitration reactor 6 from the upstream side of the air preheater at which the denitration reactor 6 is not provided (in the present embodiment, the first air preheater 2-1) increases, and the second bypass duct damper (second exhaust gas regulator) 18 that guides some of the exhaust gas flowing through the downstream side of the denitration reactor 6 to the air preheater at which the denitration reactor 6 is not provided (in the present embodiment, the first air preheater 2-1). The upstream duct damper (the third exhaust gas regulator) 11 adjusts the flow rate of the exhaust gas flowing into the denitration reactor 6 according to the differential pressure of the exhaust gas in the denitration reactor 6.

As described above, according to the denitration apparatus in the present embodiment, the flow rate of the exhaust gas flowing through the first bypass duct 9-1 is controlled to keep the temperature of the exhaust gas flowing into the denitration reactor 6 at the temperature at which the denitration can be done, whereby the denitration performance of the denitration reactor 6 can be maintained. In addition, the flow rate of the exhaust gas flowing through the duct at which the denitration reactor 6 is not provided (in the present embodiment, the upstream duct 7) is controlled to adjust the flow rate of the exhaust gas flowing into the first air preheater 2-1. This configuration can prevent the unbalance between the flow rate of the exhaust gas flowing through the first air preheater 2-1 and the flow rate of the exhaust gas flowing through the second air preheater 2-2.

### Industrial Applicability

The denitration apparatus according to the present invention can reduce cost for additionally providing the denitration apparatus without deteriorating efficiency of a whole plant, and is well adaptable as a denitration apparatus used for a coal-fired boiler.

### Reference Signs List

- 1: economizer
- 2-1: first air preheater
- 2-2: second air preheater
- 3: dust collector
- 4: ID fan
- 5: coal-fired boiler
- 6: denitration reactor
- 7: upstream duct
- 8: downstream duct
- 9-1: first bypass duct
- 9-2: second bypass duct
- 10: denitration reactor differential pressure gauge
- 11: upstream duct damper (third exhaust gas regulator)
- 12: ID fan inlet damper (fan flow controller)
- 13: air duct
- 14: thermometer
- 15: ammonium inlet port
- 16: denitration reactor inlet thermometer
- 17: first bypass duct damper (first exhaust gas regulator)
- 18: second bypass duct damper (second exhaust gas regulator)
- 19: duct differential pressure gauge
- 20: mill
- 21: chimney pipe

## Claims

1. A denitration apparatus comprising:
a coal-fired boiler (5);
an economizer (1) configured to be provided to the coal-fired boiler (5);
an upstream duct (7) configured to guide exhaust gas from an upstream side of the economize (1);
a downstream duct (9) configured to guide exhaust gas from a downstream side of the economize (1);
a first air preheater (2-1) configured to be provided at a downstream side of the upstream duct (7) ;
a second air preheater (2-2) configured to be provided at a downstream side of the downstream duct (8);
a denitration reactor (6) configured to be provided at an upstream side of the first air preheater (2-1) or the second air preheater (2-2);
a first bypass duct (9-1) configured to be provided at an upstream side of the denitration reactor (6) for connecting the upstream duct (7) and the downstream duct (8); and
a second bypass (9-2) duct configured to be provided at a downstream side of the denitration reactor (6) for connecting the upstream duct (7) and the downstream duct (8).

2. The denitration apparatus according to claim 1, wherein
the first bypass duct (9-1) guides the exhaust gas to the denitration reactor (6) from the upstream side of the air preheater (2-1, 2-2) at which the denitration reactor (6) is not provided, and
the second bypass duct (9-2) guides the exhaust gas from the downstream side of the denitration reactor (6) to the air preheater (2-1, 2-2) at which the denitration reactor (6) is not provided.

3. The denitration apparatus according to claim 1 or 2, further comprising:
a first exhaust gas regulator (17) configured to guide a total amount of the exhaust gas, flowing through the upstream side of the air preheater (2-1, 2-2) at which the denitration reactor (6) is not provided, toward the denitration reactor (6) when a temperature of the exhaust gas flowing into the denitration reactor (6) is the same or less than a predetermined temperature; and
a second exhaust gas regulator (18) that guides some of the exhaust gas, flowing through the downstream side of the denitration reactor (6), toward the air preheater (2-1, 2-2) at which the denitration reactor (6) is not provided.

4. The denitration apparatus according to claim 1 or 2, further comprising:
a first exhaust gas regulator (17) configured to control to increase a flow rate of the exhaust gas, guided toward the denigration reactor (6) from the upstream side of the air preheater (2-1, 2-2) at which the denitration reactor (6) is not provided, when the temperature of the exhaust gas flowing into the denitration reactor (6) is the same or less than a predetermined temperature; and
a second exhaust gas regulator (18) configured to guide some of the exhaust gas, flowing through the downstream side of the denitration reacto (6), toward the air preheater (2-1, 2-2) at which the denitration reactor (6) is not provided.

5. The denitration apparatus according to claim 4, further comprising:
a third exhaust gas regulator (11) configured to adjust the flow rate of the exhaust gas flowing into the denitration reactor (6) according to a differential pressure of the exhaust gas in the denitration reactor (6).

6. The denitration apparatus according to any one of claims 1 to 5, further comprising:
a fan (4) configured to be provided at each of the downstream sides of the first air preheater (2-1) and the second air preheater (2-2) so as to take in the exhaust gas; and
a fan flow controller (12) configured to adjust an intake amount of the fan (4).

7. The denitration apparatus according to claim 6, wherein the fan flow controller (12) adjusts the intake amount of the fan (4) according to a temperature of air heated by the air preheater (2-1, 2-2) at which the denitration reactor (6) is not provided.

## Patentansprüche

1. Denitrierungsvorrichtung, welche umfasst:
Einen mit Kohle-befeuerten Boiler (5)
Einen Vorwärmer (1), der ausgestaltet ist, an dem mit Kohle befeuerten Boiler (5) vorgesehen zu sein,
eine Stromaufwärts-Leitung (7), die ausgestaltet ist, Abgas von einer stromaufwärts gelegenen Seite des Vorwärmers (1) zu führen,
eine Stromabwärts-Leitung (8), die ausgestaltet ist, Abgas von einer stromabwärts gelegenen Seite des Vorwärmers (1) zu führen,
einen ersten Luft-Vorwärmer (2-1), der ausgestaltet ist, an einer stromabwärts gelegenen Seite der Stromabwärts-Leitung (8) vorgesehen zu sein,
einen zweiten Luft-Vorwärmer (2-2), der ausgestaltet ist, an einer stromabwärts gelegenen Seite der Stromabwärts-Leitung (8) vorgesehen zu sein,
einen Denitrierungs-Reaktor (6), der ausgestaltet ist an einer stromaufwärts gelegenen Seite des ersten Luft-Vorwärmers (2-1) oder des zweiten Luft-Vorwärmers (2-2) vorgesehen zu sein,
eine erste Umleitungsröhre (9-1), die ausgestaltet ist, an einer stromaufwärts gelegenen Seite des Denitrierungs-Reaktors (6) vorgesehen zu sein, um die Stromaufwärts-Leitung (7) und die Stromabwärts-Leitung (8) zu verbinden, und
eine zweite Umleitungsröhre (9-2), die ausgestaltet ist, an einer stromabwärts gelegenen Seite des Denitrierungs-Reaktors (6) vorgesehen zu sein, um die Stromaufwärts-Leitung (7) und die Stromabwärts-Leitung (8) zu verbinden.

2. Denitrierungsvorrichtung nach Anspruch 1, worin:
die erste Umleitungsröhre (9-1) das Abgas zu dem Denitrierungs-Reaktor (6) von der stromaufwärts gelegenen Seite des Luft-Vorwärmers (2-1, 2-2) leitet, an der der Denitrierungs-Reaktor (6) nicht vorgesehen ist, führt, und
die zweite Umleitungsröhre (9-2) das Abgas von der stromabwärts gelegenen Seite des Denitrierungs-Reaktors (6) zu dem Luft-Vorwärmer (2-1, 2-2) leitet, an der der Denitrierungs-Reaktor (6) nicht vorgesehen ist.

3. Denitrierungsvorrichtung nach Anspruch 1 oder 2, welche weiter umfasst:
eine erste Abgas-Regulierungseinrichtung (17), die ausgestaltet ist, eine Gesamtmenge des Abgases, das durch die stromaufwärts gelegene Seite des Luft-Vorwärmers (2-1, 2-1), an der der Denitrierungs-Reaktor (6) nicht vorgesehen ist, strömt, zu dem Denitrierungs-Reaktor (6) zu leiten, wenn die Temperatur des Abgases, das in den Denitrierungs-Reaktor (6) strömt gleich oder geringer ist als eine bestimmte Temperatur, und
eine zweite Abgas-Regulierungseinrichtung (18), die einen Teil des Abgases, das durch die stromabwärts gelegene Seite des Denitrierungs-Reaktors (6) zu dem Luft-Vorwärmer (2-1, 2-1) strömt, an der der Denitrierungs-Reaktor (6) nicht vorgesehen ist, zu leiten.

4. Denitrierungsvorrichtung nach Anspruch 1 oder 2, welche weiter umfasst
eine erste Abgas-Regulierungseinrichtung (17), die ausgestaltet ist, einen Anstieg einer Strömungsrate des Abgases, das von der stromaufwärts gelegenen Seite des Luft-Vorwärmers (2-1, 2-1), an der der Denitrierungs-Reaktor (6) nicht vorgesehen ist, zu dem Denitrierungs-Reaktor (6) geleitet wird, zu steuern, wenn die Temperatur des Abgases, das in den Denitrierungs-Reaktor (6) strömt, gleich oder geringer ist als eine bestimmte Temperatur, und
eine zweite Abgas-Regulierungseinrichtung (18), die ausgestaltet ist, einen Teil des Abgases, das durch die stromabwärts gelegene Seite des Denitrierungs-Reaktors (6) zu dem Luft-Vorwärmer (2-1, 2-1) strömt, an der der Denitrierungs-Reaktor (6) nicht vorgesehen ist, zu leiten.

5. Denitrierungsvorrichtung nach Anspruch 4, welche weiter umfasst:
eine dritte Abgas-Regulierungseinrichtung (11), die ausgestaltet ist, die Strömungsrate des Abgases, das in den Denitrierungs-Reaktor (6) strömt gemäß einem Druckunterschied des Abgases in dem Denitrierungs-Reaktor (6), einzustellen

6. Denitrierungsvorrichtung nach einem der Ansprüche 1 bis 5, welche weiter umfasst:
einen Ventilator (4), der ausgestaltet ist, an jeder stromabwärts gelegenen Seite des ersten Luft-Vorwärmers (2-1) und des zweiten Luft-Vorwärmers (2-2) vorgesehen zu sein, um Abgas aufzunehmen, und
eine Ventilationsstrom-Steuereinheit (12), die ausgestaltet ist, eine aufzunehmende Menge vom Ventilator (4) einzustellen.

7. Denitrierungsvorrichtung nach Anspruch 6, worin die Ventilationsstrom-Steuereinheit (12) die vom Ventilators (4) aufzunehmende Menge gemäß einer Temperatur der durch die Luft-Vorwärmer (2-1, 2-1), bei denen der Dcnitricrungs-Rcaktor (6) nicht vorgesehen ist, erwärmten Luft einstellt.

## Revendications

1. Appareil de dénitration comprenant :
une chaudière au charbon (5),
un économiseur (1) configuré pour être reçu sur la chaudière à charbon,
un conduit amont (7) configuré pour conduire du gaz d'échappement depuis un côté amont de l'économiseur (1),
un conduit aval (8) configuré pour conduire du gaz d'échappement depuis un côté aval de l'économiseur (1),
un premier préchauffeur d'air (2-1) configuré pour être reçu sur un côté aval du conduit amont (7),
un deuxième préchauffeur d'air (2-2) configuré pour être reçu sur un coté aval du conduit aval (8),
un réacteur de dénitration (6) configuré pour être reçu sur un côté amont du premier préchauffeur d'air (2-1) ou du deuxième préchauffeur d'air (2-2),
un premier conduit de dérivation (9-1) configuré pour être reçu sur un côté amont du réacteur de dénitration (6), pour relier le conduit amont (7) et le conduit aval (8), et
un deuxième conduit de dérivation (9-2) configuré pour être reçu sur un côté aval du réacteur de dénitration (6) pour relier le conduit amont (7) et le conduit aval (8).

2. Appareil de dénitration selon la revendication 1 dans lequel le premier conduit de dérivation (9-1) conduit le gaz d'échappement vers le réacteur de dénitration depuis le côté amont du préchauffeur d'air (2-1,2-2) sur lequel le réacteur de dénitration n'est pas installé, et le deuxième conduit de dérivation (9-2) guide le gaz d'échappement depuis le côté aval du réacteur de dénitration (6) vers le préchauffeur d'air (2-1, 2-2) sur lequel le réacteur de dénitration (6) n'est pas installé.

3. Appareil de dénitration selon la revendication 1 ou 2, comprenant en outre :
un premier régulateur (17) de gaz d'échappement configuré pour conduire un la totalité du gaz d'échappement, s'écoulant à travers le côté amont du préchauffeur d'air (2-1, 2-2) sur lequel le réacteur de dénitration (6) n'est pas installé, vers le réacteur le réacteur de dénitration (6) lorsqu'une température du gaz d'échappement s'écoulant dans le réacteur de dénitration (6) est égale ou inférieure à une température prédéterminée; et
un deuxième régulateur de gaz d'échappement (18) qui guide une partie du gaz d'échappement, s'écoulant à travers le côté aval du réacteur de dénitration (6), vers le préchauffeur d'air (2-1, 2-2) sur lequel le réacteur de dénitration (6) n'est pas installé.

4. Appareil de dénitration selon la revendication 1 ou 2, comprenant en outre
un premier régulateur (17) de gaz s'échappement configuré pour commander un accroissement du flux du gaz d'échappement conduit vers le réacteur de dénitration (6) depuis le côté amont du préchauffeur d'air (2-1, 2-2) sur lequel le réacteur de dénitration (6) n'est pas installé, lorsque la température du gaz d'échappement s'écoulant dans le réacteur de dénitration (6) est égale ou inférieure à une température prédéterminée; et
un deuxième régulateur (18) de gaz s'échappement, configuré pour conduire une partie du gaz d'échappement, s'écoulant à travers le côté aval du réacteur de dénitration (6), vers le préchauffeur d'air (2-1, 2-2) sur lequel le réacteur de dénitration (6) n'est pas installé.

5. Appareil de dénitration selon la revendication 4, comprenant en outre :
un troisième régulateur (11) de gaz d'échappement, configuré pour ajuster le flux du gaz d'échappement s'écoulant dans le réacteur de dénitration (6) selon une pression différentielle du gaz d'échappement dans le réacteur de dénitration (6).

6. Appareil de dénitration selon l'une quelconque des revendications 1 à 5, comprenant en outre :
un ventilateur (4) configuré pour être reçu sur chacun des côtés aval du premier préchauffeur d'air (2-1) et du deuxième préchauffeur d'air (2-2) pour recevoir le gaz d'échappement;
un régulateur (12) de flux de ventilateur configuré pour ajuster l'admission du ventialteur (4).

7. Appareil de dénitration selon la revendication 6, dans lequel le régulateur (12) de flux de ventilateur ajuste l'admission du ventilateur (4) selon une température d'air chauffé par le préchauffeur d'air (2-1,2-2) sur lequel le réacteur de dénitration (6) n'est pas installé.
